# FASCICULE DE BREVET EUROPEEN

(11) **EP 1 338 489 B1**
(45) Date de publication et mention de la délivrance du brevet: **09.02.2011**
(21) Numéro de dépôt: 03003874.9
(22) Date de dépôt: 20.02.2003
(51) Int. Cl.: B60T 7/04, B60T 11/20, B60T 13/68, B60T 8/40

(54) **Maître-cylindre pour systeme de freinage electro-hydraulique**
Hauptbremszylinder für elektrohydraulisches Bremssystem
Master cylinder for electro-hydraulic brake system

(30) Priorité: 25.02.2002 FR 0202449
(43) Date de publication de la demande: 27.08.2003
(73) Titulaire: ROBERT BOSCH GMBH, 70442 Stuttgart (DE)
(72) Inventeur: Anderson, Chris, 75002 Paris (FR)
(74) Mandataire: Hurwic, Aleksander Wiktor

(56) Documents cités:
- WO-A-01/68427
- WO-A-01/72566
- DE-A- 10 026 309
- DE-A- 19 952 778
- US-B1- 6 192 685

## Description

La présente invention se rapporte principalement à un maître-cylindre pour système de freinage électro-hydraulique comportant des moyens améliorés de simulation de la sensation pédale et à un système de freinage électro-hydraulique comportant un tel maître-cylindre.

Les systèmes de freinage électro-hydrauliques comportent un maître-cylindre simulant en fonctionnement normal, la réaction mécanique d'un circuit de freinage classique ressentie à la pédale de frein par un conducteur, et des moyens de détection de l'action du conducteur sur la pédale de frein, les moyens de détection envoyant l'information à un calculateur qui génère l'ordre à une pompe hydraulique d'envoyer du liquide de frein sous pression aux freins. En fonctionnement dégradé, par exemple lorsque la pompe ne répond pas, le maître-cylindre alimente en liquide de frein sous pression les freins comme dans un circuit de freinage classique.

Les maître-cylindre pour système de freinage électro-hydraulique de type connu voir par example US-B- 6 192 685, comportent un corps de forme sensiblement cylindrique dans lequel est pratiqué un alésage divisé en au moins une chambre d'alimentation et en une chambre de travail par un piston monté à coulissement étanche dans l'alésage et actionné par une tige d'actionnement reliée à un pédale de frein Le piston permet au repos une communication entre les deux chambres et une séparation étanche des deux chambres lors d'une action de freinage. La chambre d'alimentation est raccordée de manière étanche à un réservoir de liquide de frein et la chambre de travail est en fonctionnement normal raccordée à une cartouche de simulation de la sensation pédale ou cartouche de sensation pédale et en fonctionnement dégradée à au moins un frein disposé au niveau d'une roue.

La cartouche de sensation pédale comporte une enveloppe délimitant une chambre sensiblement cylindrique dans lequel coulisse un piston soumis en fonctionnement normal lors d'une phase de freinage par une première face au liquide de frein sous pression fourni par la chambre de travail et par une deuxième face à une première extrémité d'un moyen élastique, la seconde extrémité du moyen élastique étant en appui contre le fond de la chambre opposé au piston. Le moyen élastique permet de simuler la réaction mécanique d' un circuit de freinage classique, qui correspond à une relation liant la force à la pédale en fonction de la course de la pédale. La courbe caractéristique de cette relation comporte au moins une première partie correspondant à l'absorption du circuit de freinage en début de phase de freinage, puis une seconde partie correspondant à une réaction de plus en plus importante avec l'augmentation du niveau de freinage.
Les moyens élastiques de type connu pour les cartouches de sensation pédale sont par conséquent très complexes et coûteux, ils comportent par exemple plusieurs ressorts hélicoïdaux, de charges différentes, à pas constant et à pas variable, des éléments en élastomère pour simuler l'absorption du circuit. De plus le montage est long et augmente par conséquent le prix de revient du fait du grand nombre de pièces nécessaires pour simuler correctement une réaction pédale classique.

Les systèmes de freinage électro-hydrauliques permettent une excellente maîtrisé du freinage et du véhicule, cependant les moyens de simulation de la réaction du circuit de freinage sont relativement complexes et demandent un ajustement précis et par conséquent il n'est pas envisageable des les appliquées à une large gamme de véhicules.

De plus, les équipementiers automobiles souhaitent standardiser le plus possible les composants constituant les systèmes de freinage. Cependant chaque type de véhicule automobile a une sensation pédale caractéristique, ce qui implique actuellement de modifier de manière importante les moyens de simulation de la sensation pédale pour chaque type de véhicule automobile.

Il serait particulièrement intéressant pour le conducteur du véhicule de pouvoir modifier la sensation pédale suivant le type de conduite souhaité ce qui est actuellement impossible avec les moyens existants. En particulier, lorsque le véhicule automobile est conduit par plusieurs personnes souhaitant un confort de freinage différent, il serait possible de mémoriser dans le calculateur du véhicule les réglages du dispositif de sensation pédale relatifs à chaque personne susceptible d'utiliser le véhicule automobile et d'opérer le réglage automatique lors de l'identification du conducteur.

Il est envisageable de réduire le nombre d'éléments constituant la cartouche de simulation, par exemple en utilisant un seul ressort.

L'utilisation de ressorts de type hélicoïdal à pas régulier ne conviennent pas, puisque ceux-ci ont un coefficient de raideur k constant, la contrainte de déformation Fd est reliée de manière linéaire à la déformation axiale x par la relation Fd = k*x, cette relation étant valable tant que le ressort se déforme élastiquement.

Il existe également des ressorts à pas variable dont la contrainte de déformation est reliée de manière non linéaire à la déformation axiale du ressort et dont la caractéristique se rapproche de celle d'un circuit de freinage classique, cependant ces ressorts ne permettent pas un ajustement de la sensation pédale simulée suivant le type de véhicule et/ou le conducteur.

C'est par conséquent un but de la présente invention d'offrir un maître-cylindre pour système de freinage électro-hydraulique de constitution simple et permettant une sensation pédale simulée très proche de la réaction d'un circuit de freinage classique.

C'est également un but de la présente invention d'offrir un maître-cylindre pour système de freinage électro-hydraulique permettant d'être appliquer facilement à différents modèles de véhicules automobiles.

C'est également un but de la présente invention d'offrir un maître-cylindre pour système de freinage électro-hydraulique dont la sensation pédale simulée est ajustable simplement.

C'est également un but de la présente invention d'offrir un maître-cylindre pour système de freinage électro-hydraulique utilisables pour plusieurs modèles de véhicule automobile.

Ces buts sont atteints par un maître-cylindre comportant une cartouche de simulation de la sensation pédale comportant un moyen élastique reproduisant la réaction d'un circuit de freinage classique, le moyen élastique comportant un premier ressort hélicoïdal et des moyens d'appui mobile pour au moins une spire du premier ressort hélicoïdal et permettant au moins une modification de la raideur du moyen élastique.

En d'autres termes, le moyen élastique comporte un premier et un second ressorts hélicoïdaux coaxiaux, les spires du second ressort étant disposées dans les intervalles séparant les spires du premier ressort, les spires du premier ressort qui, lors du déplacement du piston, se rapprochent les unes des autres et viennent en appui contre les spires du second ressort qui sont alors elles-mêmes déplacées dans le sens de déplacement du piston, provoquant une augmentation de la raideur du moyen élastique selon la présente invention sensiblement continue simulant la réaction à la pédale de frein d'un circuit de freinage classique.

De plus, l'évolution de la raideur dépendant des distances séparant une spire du premier ressort d'une spire du second ressort avec laquelle elle est susceptible de venir en contact, on peut alors avantageusement prévoir un dispositif permettant de modifier ces distancés et ainsi de faire varier la caractéristique de sensation pédale de manière simple.

La présente invention a principalement pour objet un maître-cylindre pour systèmes de freinage électro-hydraulique comportant un corps percé d'un alésage, un piston monté à coulissement étanche dans l'alésage et divisant axialement l'alésage en une chambre d'alimentation raccordée de manière étanche à un réservoir de liquide de frein et en une chambre de travail et une cartouche de simulation de la sensation pédale, ladite chambre de travail étant en communication en fonctionnement normal avec l'intérieur de la cartouche de simulation de la sensation pédale et en fonctionnement dégradé avec au moins un frein disposé au niveau d'une roue, ladite cartouche comportant un piston susceptible d'être soumis par une première face au liquide de frein sous pression fourni par la chambre de travail, et soumis par une seconde face à un moyen élastique à raideur variable caractérisé en ce que le moyen élastique comporte au moins un premier ressort hélicoïdal et un second ressort hélicoïdal, le premier ressort comportant des premières spires et étant monté en appui entre la seconde face du piston de la cartouche et un fond de la cartouche, le second ressort comportant des secondes spires et étant monté coaxial au premier ressort de manière que le moyen élastique comporte des ensembles formés d'une spire menante Ste du premier ressort et d'une spire menée du second ressort, la spire menante précédant la spire menée du même ensemble dans la direction de déplacement du piston de la cartouche lors d'une action de freinage, en ce que la spire menée d'un ensemble est susceptible de former un moyen d'appui mobile pour la spire menante dudit ensemble lors d'une action de freinage.

La présente invention a également pour objet un maître-cylindre caractérisé en ce que la spire menante est séparée de la spire menée d'une distance variant de manière monotone sur un tour de spire.

La présente invention a également pour objet un maître-cylindre caractérisé en ce que la variation de la distance entre la spire menée et la spire menante diffère pour chaque ensemble.

La présente invention a également pour objet un maître-cylindre caractérisé en ce que le premier ressort est un ressort hélicoïdal à spires de section sensiblement circulaire et en ce que le second ressort est un ressort hélicoïdal à spires de section sensiblement parallélépipédique.

La présente invention a également pour objet un maître-cylindre caractérisé en ce que les spires du premier ressort sont séparées d'une distance axiale constante.

La présente invention a également pour objet un maître-cylindre caractérisé en ce que les spires du second ressort sont séparées d'une distance axiale constante.

La présente invention a également pour objet un maître-cylindre caractérisé en ce que la cartouche comporte des moyens d'ajustement de la sensation pédale simulée permettant la modification de la position angulaire relative de la spire menée par rapport à la spire menante du même ensemble.
La présente invention a également pour objet un maître-cylindre caractérisé en ce que lesdits moyens d'ajustement comporte un moteur électrique pas à pas permettant un déplacement en rotation du second ressort.

La présente invention a également pour objet un système de freinage électro-hydraulique comportant des moyens de détection de l'action de freinage du conducteur, un calculateur recevant les informations des moyens de détection et générant des ordres de commande pour provoquer l'actionnement d'au moins un frein disposé au niveau d'une roue, un générateur de pression recevant l'ordre du calculateur d'envoyer du liquide sous pression dans les freins, un maître-cylindre permettant la simulation de la sensation pédale en fonctionnement normal et servant de source de liquide de frein sous pression en fonctionnement dégradé, et des électrovannes pour interrompre la communication entre ledit maître-cylindre et les freins en fonctionnement normal, caractérisé en ce que ledit maître-cylindre est un maître-cylindre selon l'invention.

La présente invention a également pour objet un système de freinage caractérisé en ce que le générateur de pression est une pompe électrique.

La présente inventions sera mieux comprise à l'aide de la description qui suit et des dessins annexées pour lesquels l'avant, l'arrière, la partie supérieure et la partie inférieure correspondent respectivement à la gauche, la droite, le haut et le bas des dessins et pour lesquels :

Les mêmes références seront utilisées pour des éléments ayant sensiblement la même forme ou sensiblement la même fonction
La figure 1 est une vue en coupe longitudinale d'un maître-cylindre pour système de freinage électro-hydraulique de l'état de la technique ;
La figure 2 est une courbe caractéristique d'une sensation pédale d'un circuit hydraulique classique ;
La figure 3 est une vue en coupe d'un détail d'un maître-cylindre selon la présente invention.
La figure 4 est un schéma d'un système de freinage électro-hydraulique selon la présente invention.

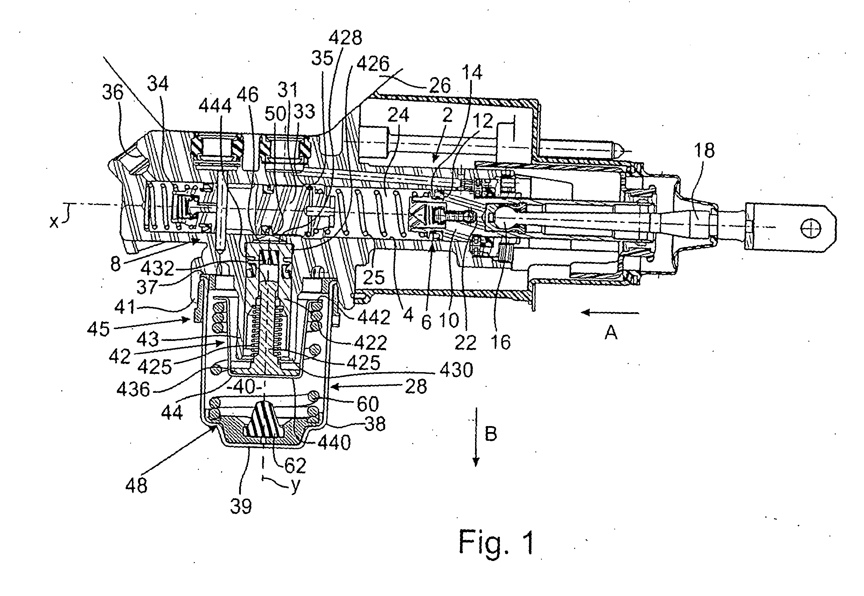

Sur la figure 1, on peut voir un maître-cylindre de type connu comportant un corps 2 d'axe longitudinal X percé d'un alésage 4 d'axe X borgne, divisé en un circuit hydraulique primaire 6 et en un circuit hydraulique secondaire 8. Les circuits hydrauliques primaire et secondaire étant de structure proche nous ne décrirons que le circuit primaire 6.
Le circuit primaire 6 comporte un piston hydraulique 10 monté à coulissement étanche dans l'alésage 4 au moyen de joint à lèvre 12 monté dans un gorge annulaire 14 pratiquée sur la périphérie du piston 10. Le piston 10 reçoit dans sa partie arrière une extrémité longitudinale avant 16 d'une tige d'actionnement 18 conformée en rotule, la tige d'actionnement étant reliée par un extrémité longitudinale arrière 20 à une pédale de frein (non représentée) disposée dans l'habitacle du véhicule. La piston 10 divise l'alésage 4 en une chambre d'alimentation 22 disposée en arrière du piston 10 et en une chambre de travail 24 en avant du piston 10. La chambre d'alimentation est raccordée par des moyens étanches 24 à un réservoir de liquide de frein 26 et la chambre de travail est raccordée en fonctionnement normal à une cartouche de simulation de la sensation pédale 28 et en fonctionnement dégradé à des freins disposés au niveau des roues.

Le piston 10 comporte dans sa partie centrale un passage longitudinal 30 muni d'un clapet 32 mettant au repos en communication la chambre d'alimentation et la chambre de travail et isolant les deux chambres 22,24 lors d'un phase de freinage.

Un moyen de rappel 25 du piston 10 est disposé dans la chambre de travail primaire 24.

A l'inverse du circuit primaire 6, le circuit secondaire n'est jamais relié de manière hydraulique à la cartouche 28. En effet en fonctionnement normal, la chambre de travail secondaire 34 est isolée du circuit de freinage et en fonctionnement dégradé, la chambre de travail secondaire est reliée aux freins par un canal 36 ouvert à l'état repos et à l'été dégradé et reliant la chambre de travail secondaire 34 aux freins.

Le piston secondaire 31 comporte un joint torique 35 sur sa périphérie extérieure coopérant en fonctionnement dégradé avec un épaulement 33 pratiqué sur la périphérie de l'alésage 4 et interrompant la communication entre la chambre de travail 24 et l'intérieur de la cartouche 28.

La cartouche de simulation de la sensation pédale 28 d'axe Y sensiblement perpendiculaire à l'axe X du corps du maître-cylindre comporte un enveloppe 38 en forme sensiblement de U. L'enveloppe comporte une extrémité ouverte 37 fixée de manière étanche au corps du maître-cylindre et un fond 39, et définit une chambre intérieure 40 dans lequel est monté à coulissement étanche un piston 42 soumis sur une première face 44 à la pression régnant dans la chambre de travail primaire 24 et sur une seconde face 46 opposée à la première face 44 à la réaction d'un moyen élastique 48.
L'acheminement du liquide de frein de la chambre de travail 24 à la cartouche s'effectue par un canal 50 pratiqué dans le corps du maître-cylindre sensiblement perpendiculairement à l'axe X.
Le corps du maître-cylindre 2 comporte un premier 43 et un second 41 manchons coaxiaux d'axe Y, le premier manchon 43 borde le canal 50 et reçoit à coulissement étanche une partie du piston 42, le second manchon 41 entour le premier manchon 43 et comportent des moyens de fixation 45 de la cartouche au corps du maître-cylindre par exemple vis écrou 45.

Le piston 42 est composite et comporte une première partie tubulaire 422 en coulissement étanche dans le premier manchon 43 au moyen de joint à lèvres disposées dans une gorge 424 pratiquée dans la périphérique extérieure de la première partie 422. La première partie tubulaire 422 comporte une première extrémité longitudinale 426 obturée par un fond 428 en regard du canal 50 et une seconde extrémité longitudinale 430 opposées à la première extrémité 426 recevant une seconde partie 425 du piston 42 en forme de T orientée vers le bas, le pied du T 432 étant montée à coulissement dans la première partie tubulaire 422. Un ressort hélicoïdal 434 est monté en compression entre la tête 436 du T 425 et un épaulement pratiqué dans la première partie tubulaire 422.
Le piston 42 comporte également une troisième partie 438 en forme de U orienté de bas en haut sur la figure, et entourant le premier manchon 43, le fond 440 du U 438 recevant la tête 436 de la seconde partie 425. La troisième partie comporte à son extrémité supérieure ouverte une collerette 442 s'étendant radialement vers l'extérieur.

Un plot élastique 444, par exemple en élastomère est disposé entre le fond 428 de la première partie 422 et le pied du T 432.

Le moyen élastique 48 de simulation de la sensation pédale comporte le premier ressort hélicoïdal 434 à pas constant, un ressort hélicoïdal 60 à pas variable monté en compression entre le fond 39 de l'enveloppe et le collerette 442 et un téton 62 en élastomère pincé entre le fond 39 de la cartouche et une extrémité longitudinale inférieure 64 du ressort 60, ledit téton assurant la simulation de la sensation de la réaction à la pédale en freinage maximal en fin de course pour un circuit de freinage classique.

Les ressorts 434,60, lors d'une action de freinage, travaillent dans leur domaine de déformation élastique.

Nous allons maintenant décrire rapidement le fonctionnement du maître-cylindre de l'état de la technique.

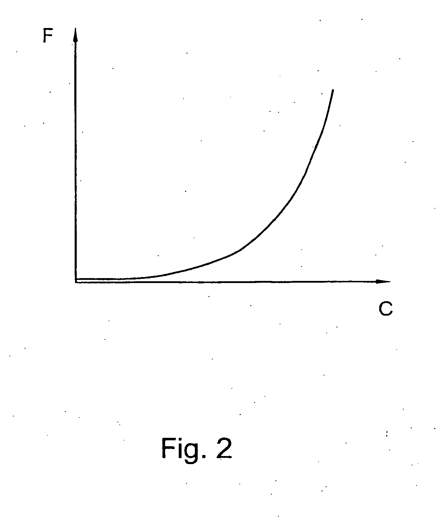

Lors d'une application sur la pédale de frein, le piston 10 se déplace suivant la direction indiquée par la flèche A à l'encontre du ressort 25 provoquant la fermeture du clapet 32 et l'isolation des chambres 22 et 24, le volume de la chambre de travail 24 se réduisant, la pression augmente dans la chambre de travail agissant sur la première face 44 du piston 42. Lorsque la pression dans la chambre de travail 24 dépasse une valeur prédéterminée le piston 42 se déplace selon la flèche B à l'encontre du ressort 434, puis du ressort 60.
Tout d'abord, le ressort 434 permet de simuler l'absorption d'un circuit de freinage classique, puis du fait de la variabilité du pas du ressort 60, la relation entre le déplacement du piston 42 et la pression appliquée sur la première face 44 du piston 42 n'est pas linéaire et se rapproche de la réaction d'un circuit de freinage classique (figure 2)
En fin de course, correspondant un effort de freinage maximum, le piston vient écrasé le téton 62 par la petite base 54 ce qui simule la saturation dans un circuit de freinage classique.

Le piston du circuit secondaire ne se déplace pas.

En fonctionnement dégradé, le canal 36 du circuit secondaire est ouvert et le déplacement du piston primaire 10 provoque le déplacement du piston secondaire 31 qui ferme la communication entre la chambre de travail 24 et la cartouche 28 par. application du joint torique 35 contre l'épaulement 33.. Le maître-cylindre fonctionne alors comme un maître-cylindre classique.

Le maître-cylindre tel que décrit précédemment donne satisfaction cependant il est d'une réalisation complexe et il ne permet pas de modifier la réaction simulée par la cartouche.

Il existe également des systèmes de freinage électro-hydrauliques comportant un maître-cylindre monocircuit, c'est-à-dire ne comportant qu'un seul piston de pression et par conséquent une seule chambre de travail raccordée en fonctionnement normal à la cartouche de sensation pédale et alimentant en cas de défaillance deux ou quatre freins disposés au niveau des roues.

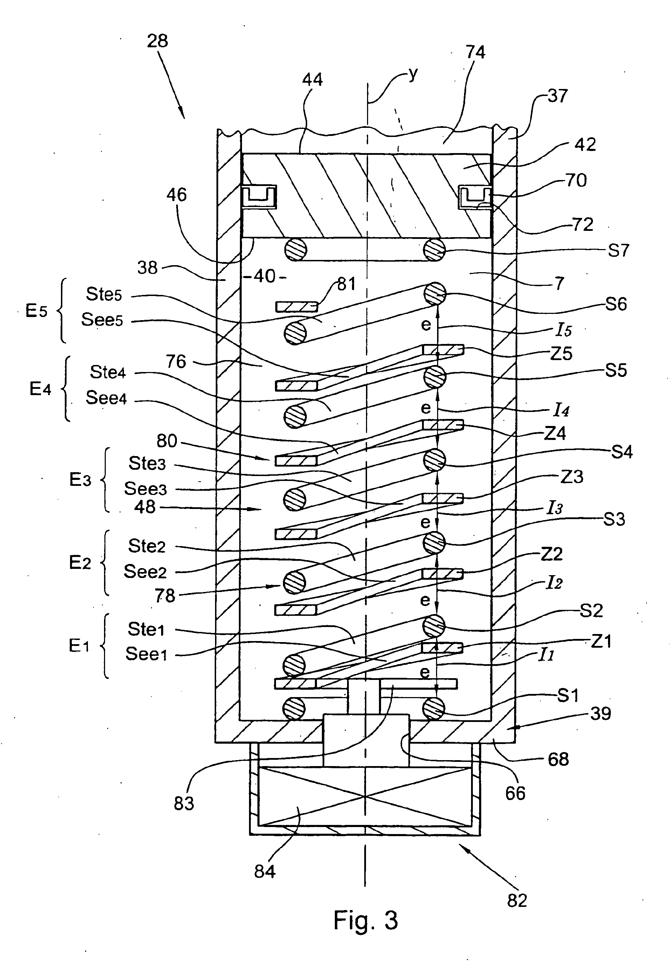

Sur la figure 3, on peut voir un cartouche de simulation de la sensation pédale 28 selon la
Sur la figure 3, on peut voir un cartouche de simulation de la sensation pédale 28 selon la présente invention. Le maître-cylindre est identique à celui décrit précédemment, par conséquent nous ne décrirons que la cartouche 28.

La cartouche 28 selon la présente invention comporte une enveloppe 38 d'axe Y ayant sensiblement la forme d'un U, la partie supérieure du U formant une première extrémité longitudinale 37 ouverte de la cartouche qui est reliée de manière étanche au corps 2 du maître-cylindre. Une seconde extrémité longitudinale opposée à la première extrémité 37 formant le fond 39 de la cartouche est avantageusement percé d'un orifice 66 bordé par une collerette sensiblement annulaire 68 et permettant le passage d'un moyen de réglage.

L'enveloppe 38 définit une chambre intérieure 40 dans laquelle est monté à coulissement étanche un piston 42, l'étanchéité étant réalisée par exemple au moyen d'un joint à lèvres 70 monté fixe dans une gorge annulaire 72 pratiquée sur la périphérie du piston 42 en regard de la surface latérale intérieure de la chambre 40, la forme du piston 42 n'est bien entendu pas limitative, et l'emploi d'un piston tel que représenté à la figure 1 ne sort pas du cadre de la présente invention.

Le piston 42 divise de manière étanche la chambre 40 en une chambre supérieure hydraulique 74 délimitée en partie par une première face 44 du piston 42 et en une chambre inférieure « sèche » 76 délimitée par une seconde face 46 du piston 42, la chambre 76 est qualifiée de « sèche » puisque à l'inverse de la chambre 74, elle ne reçoit pas de liquide de frein.

La cartouche 28 comporte également un moyen élastique 48 monté dans la chambre inférieure 76, le moyen élastique comportant au moins un ressort hélicoïdal 78 d'axe Y monté en compression entre la seconde face 46 du piston 42 et la collerette annulaire 68.

Le ressort 78 selon le mode de réalisation représenté est un ressort hélicoïdal à pas régulier comportant des spires S1,S2,S3,S4,S5,S6,S7, par conséquent les intervalles I1, I2, I3, I4, I5 séparant les spires S1,S2,S3,S4,S5,S7 ont tous la même dimension axiale e.

Cependant il est envisageable de prévoir par exemple un ressort hélicoïdal à pas variable, un ressort hélicoïdal cylindrique ou conique.

Il est bien entendu que le ressort 78, lors d'une action de freinage travaille dans son domaine de déformation élastique.

Le moyen élastique 48 comporte également un second ressort hélicoïdal comportant des secondes spires Zi, dans l'exemple représenté il comporte Z1, Z2, Z3, Z4, Z5, Z6 et monté de manière coaxial au premier ressort 78 dans le ressort 78. Le second ressort 80 est alors apte à coopérer avec le ressort 78 de manière à ce que les secondes spires Z1, Z2, Z3, Z4, Z5, Z6 soient disposées respectivement dans les intervalles I1, I2, I3, I4, I5, 16.

i,j,n est un nombre entier positif supérieur à un.

Le second ressort 80 est avantageusement à pas régulier, par conséquent dans l'exemple de réalisation représenté, les intervalles séparant le spires du second ressort 80 sont tous de même longueur d.

La distance d séparant les spires du second ressort 80 est avantageusement inférieur à la distance e séparant les spires du premier ressort 78. Mais une cartouche comportant un second ressort ayant un pas supérieur à celui du premier ressort ne sort pas du cadre de la présente invention.

Ainsi le moyen élastique 48 comporte des ensembles Ej formés d'une spire des premières spires Sn du premier ressort 78 appelée spire menante Stej et d'une spire des secondes spires Zi du second ressort dite spire menée Seej. Le nombre d'ensembles Ej est égal au nombre de spires Zi du second ressort 80 retranché de 1.

La distance aj séparant la spire menée Seej de la spire menante Stej d'un ensemble Ej étant continûment croissante ou décroissante sur un tour de spire suivant le sens de rotation choisi, le contact lors d'une phase de freinage entre la spire menante et la spire menée se fait progressivement, par conséquent le passage d'une valeur de raideur du moyen élastique 48 à une autre valeur est elle aussi progressive ce qui réduit les discontinuités dans la sensation à la pédale ressentie par le conducteur et permet une simulation de la réaction du circuit très proche des réactions d'un circuit de freinage classique.

De plus la distance aj séparant une spire menée Seej d'une spire menante Stej d'un ensemble Ej à un autre ne varie dans des intervalles de longueur différents. Par conséquent toutes les spires menantes n'entrent pas en contact avec leur spire menée associées simultanément, ce qui permet une variation de la raideur du moyen élastique 48 presque continue.

Il est bien entendu qu'il n'est pas nécessaire qu le premier et le second ressort 78,80 aient le même nombre de spires Sn,Zi

Le second ressort 80 comporte une extrémité supérieure libre 81 et une extrémité inférieure 83 fixé soit à un bouchon obturant l'orifice 66 après la mise en place du moyen élastique 48 ou à des moyens d'ajustement 82 de sensation pédale simulée.

Le premier ressort est avantageusement un ressort hélicoïdal dont les spires Sn sont à section transversale circulaire et le second ressort est avantageusement un ressort à spires Zi plates, les spires Zi étant à section transversale à section parallélépipédique.

Cependant il est bien entendu que le premier et le second ressorts 78,80 peuvent être tout deux des ressort file ou plat, cylindriques ou coniques ou tout autre type de ressort permettant un appui des spires du premier ressort 80 sur les spires Zi du second ressort.

Il est bien entendu qu'il n'est pas nécessaire que toutes les intervalles In comporte une spires Zi du second ressort 80.

Le premier et le second ressort 78, 80 sont avantageusement réalisés en fil métallique à ressort cependant l'usage par exemple de matériaux plastiques ou de tout autre matériau ayant les mêmes caractéristiques que le fil métallique à ressort pour l'un ou les deux ressort 78,80 est envisageable

Le mode de réalisation tel que représenté comporte également les moyens d'ajustement 82 de sensation pédale simulée, ceci en modifiant la position angulaire relative du second ressort 80 par rapport au premier ressort 78, en particulier la position angulaire de la spire menée Seej d'un ensemble Ej relativement à la spire menante Stej dudit ensemble Ej, ce qui modifie l'intervalle de variation de la distance a séparant la spire menante Stej de la spire menée Seej du même ensemble Ej et ainsi modifie l'allure de la caractéristique force à la pédale-course à la pédale.

Les moyens d'ajustement 82 comporte un dispositif 84 permettant de modifier la position angulaire des spires Z1, Z2, Z3, Z4, Z5, Z6 relativement aux spires S1,S2,S3,S4,S5,S6, S7 et ainsi de modifier la caractéristique de la réaction à la pédale de frein.
Le dispositif 84 est par exemple un moteur électrique pas à pas auquel la seconde extrémité longitudinale 39 du second ressort est fixée, le moteur permettant un déplacement angulaire dans le sens horaire ou anti-horaire du second ressort 80 relativement au premier ressort 78.

Nous allons maintenant décrire le fonctionnement de la cartouche de simulation de la sensation pédale selon la présente invention. Il est bien entendu que lorsque nous décrivons une mise en contact d'une spire Sn avec une spire Zn, il s'agit d'un contact progressif et continu et s'effectuant par zone de spire et non pas spire entière et de manière simultanée.

Lors d'une application sur la pédale de frein, le piston 10 se déplace suivant la flèche A à l'encontre du ressort 25 provoquant la fermeture du clapet 32 et l'isolation des chambres 22 et 24, le volume de la chambre de travail 24 se réduisant, la pression augmente dans la chambre de travail qui agit également sur la première face 44 du piston mixte 42. Lorsque la pression dans la chambre de travail 24 dépasse une valeur prédéterminée le piston mixte 42 se déplace selon la flèche B à l'encontre du ressort 78.

Si la pression dans la chambre de travail 24 continue à augmenter la spire menée Seej d'un ensemble Ej, dont la dimension axiale aj maximale séparant la spire menante Stej et la spire menée Seej est la plus faible relativement aux dimensions a minimales aj des autres ensembles Ej, vient en appui progressivement et continûment contre la spire menée Seej et emporte celle-ci dans la direction B, modifiant la raideur du moyen élastique 48 et donc la réaction à la pédale.

Dans l'exemple représenté, c'est la spire S2 menante ou Ste1 de l'ensemble E1 qui vient en contact progressif en premier avec la spire menée Z1 ou See1..

Il est envisageable qu'il y ait simultanément plusieurs spires menantes Stej qui entrent en contact progressif avec leur spire menée Seej associée.

Si le conducteur continue a déplacer la pédale de frein dans le sens d'une application de freinage, la pression dans la chambre d e travail 24 augmente encore et déplace le piston 42, mettant ainsi en appui d'autres spires menantes Stej avec leur spire menée Seej associées et modifiant par conséquent à nouveau la raideur du moyen élastique 48, en l'augmentant.

Ceci jusqu'à ce que le piston 48 vienne en appui contre le téton simulant la fin de course d'un circuit de freinage classique.

Par conséquent, le moyen élastique 48 forme un ressort à pas variable modifiable.

Il est bien entendu que l'axe Y de la cartouche peut être orienté de toute autre manière que perpendiculairement à l'axe X du corps du maître-cylindre

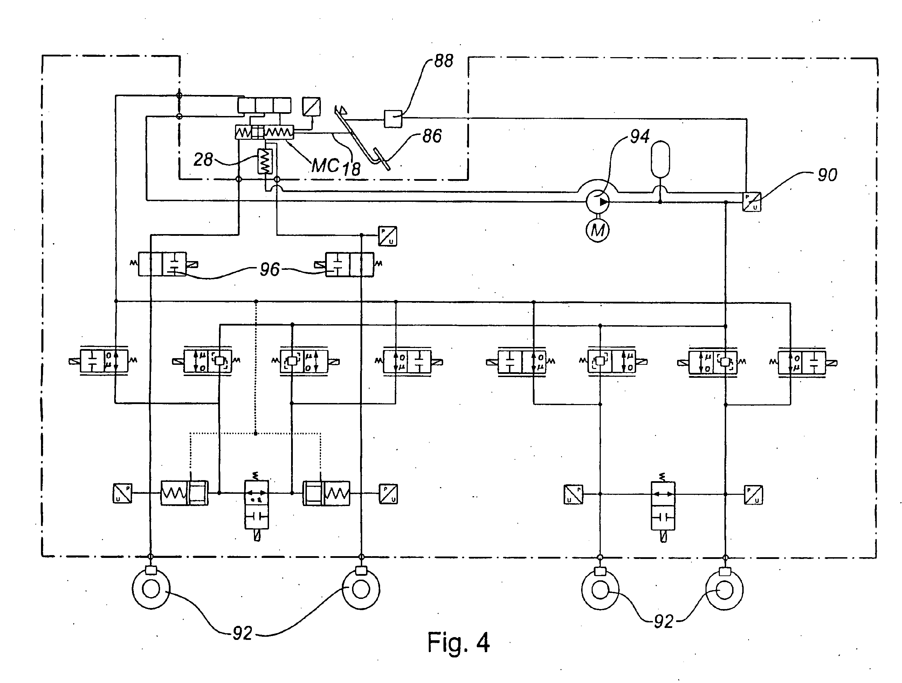

Sur la figure 4, on peut voir un système de freinage électro-hydraulique selon la présente invention comportant un maître-cylindre MC selon la présente invention actionné par la tige d'actionnement 18 reliée à une pédale de frein 86, des moyens de détection 88 du déplacement longitudinal de la tige d'actionnement 18 par exemple des capteurs de courses, un calculateur 90 recevant les informations des moyens de détection 88 et générant des ordres de commande pour provoquer l'actionnement de freins 92, un générateur de pression 94 par exemple une pompe électrique recevant l'ordre du calculateur 90 d'envoyer du liquide sous pression dans les freins 92 et des électrovannes 96 pour interrompre la communication entre le maître-cylindre et les freins en fonctionnement normal, celles-ci étant ouvertes au repos et en fonctionnement dégradé.

Lors d'une action du conducteur sur la pédale de frein 86, les moyens de détection 88 envoie l'information au calculateur 90 qui génère l'ordre à la pompe 94 d'envoyer du liquide sous pression dans les freins 92. Un réaction simulée correspondant à un circuit de freinage classique est transmise au conducteur par la pédale de frein lui donnant la possibilité d'ajuster son niveau de freinage.

Il est bien entendu qu'un maître-cylindre comportant un seul circuit hydraulique formé d'une chambre d'alimentation et d'une chambre de pression, la chambre de pression étant raccordée à une cartouche de simulation de la sensation pédale comportant un moyen élastique selon la présente invention ne sort pas du cadre de la présente invention

Nous avons bien réalisé un maître-cylindre comportant des moyens de simulation de la sensation pédale efficace et de réalisation simple, et permettant avantageusement une adaptation simple et rapide de ces maîtres-cylindres sur différents modèles de véhicule la technique et/ou une adaptation au souhait du conducteur du véhicule.

La présente invention s'applique notamment à l'industrie automobile.

La présente invention s'applique notamment à l'industrie du freinage pour véhicule automobile et notamment à l'industrie du freinage pour voiture particulière.

## Revendications

1. Maître-cylindre pour systèmes de freinage électro-hydraulique comportant un corps (2) d'axe longitudinal (X) percé d'un alésage (4), un piston (10) monté à coulissement étanche dans l'alésage et divisant axialement l'alésage en une chambre d'alimentation (22) raccordée de manière étanche à un réservoir de liquide de frein (R) et en une chambre de travail (24) et une cartouche (28) de simulation de la sensation pédale, ladite chambre de travail (24) étant en communication en fonctionnement normal avec l'intérieur de la cartouche (28) de simulation de la sensation pédale et en fonctionnement dégradé avec au moins un frein disposé au niveau d'une roue, ladite cartouche (28) comportant un piston (42) susceptible d'être soumis par une première face (44) au liquide de frein sous pression fourni par la chambre de travail (24), et soumis par une seconde face (46) à un moyen élastique (48) à raideur variable **caractérisé en ce que** le moyen élastique (48) comporte au moins un premier ressort hélicoïdal (78) et un second ressort hélicoïdal (80), le premier ressort (78) comportant des premières spires (Sn) et étant monté en appui entre la seconde face (44) du piston (42) de la cartouche et un fond de la cartouche, le second ressort(80) comportant des secondes spires (Zi) et étant monté coaxial au premier ressort (78) de manière que le moyen élastique (48) comporte des ensembles (Ej) formés d'une spire menante (Ste) du premier ressort (78) et d'une spire menée (Seej) du second ressort (80), la spire menante (Stej) précédant la spire menée (Seej) du même ensemble (Ej) dans la direction (B) de déplacement du piston (42) de la cartouche lors d'une action de freinage, **en ce que** la spire menée (Seej) d'un ensemble (Ej) est susceptible de former un moyen d'appui mobile pour la spire menante (Stej) dudit ensemble lors d'une action de freinage.

2. Maître cylindre selon la revendication 1 **caractérisé en ce que** la spire menante (Stej) est séparée de la spire menée (Seej) d'une distance (aj) variant de manière monotone sur un tour de spire.

3. Maître cylindre selon la revendication 2 **caractérisé en ce que** la variation de la distance (aj) entre la spire menée (Seej) et la spire menante (Stej) diffère pour chaque ensemble (Ej).

4. Maître-cylindre selon la revendication 1,2 ou 3 **caractérisé en ce que** le premier ressort (78) est un ressort hélicoïdal à spires (Sn) de section sensiblement circulaire et **en ce que** le second ressort(80) est un ressort hélicoïdal à spires (Zi) de section sensiblement parallélépipédique.

5. Maître-cylindre selon la revendication 1 à 4 **caractérisé en ce que** les spires (Sn) du premier ressort (78) sont séparées d'une dimension axiale (e) constante.

6. Maître-cylindre selon l'une quelconque des revendications précédentes **caractérisé en ce que** les spires (Zi) du second ressort (78) sont séparées d'une distance axiale (d) constante.

7. Maître-cylindre selon l'une quelconque des revendications précédentes **caractérisé en ce que** la cartouche comporte des moyens d'ajustement (82) de la sensation pédale simulée permettant la modification de la position angulaire relative de la spire menée (Seej) par rapport à la spire menante (Stej) du même ensemble.

8. Maître-cylindre selon la revendication précédente **caractérisé en ce que** lesdits moyens d'ajustement (82) comporte un moteur électrique pas à pas permettant un déplacement en rotation du second ressort.

9. Système de freinage électro-hydraulique comportant des moyens de détection 88 de l'action de freinage du conducteur, un calculateur 90 recevant les .informations des moyens de détection 88 et générant des ordres de commande pour provoque l'actionnement d'au moins un frein 92 disposé au niveau d'une roue, un générateur de pression 94 recevant l'ordre du calculateur 90 d'envoyer du liquide sous pression dans les freins 92, un maître-cylindre permettant la simulation dé la sensation pédale en fonctionnement normal et servant de source de liquide de frein sous pression en fonctionnement dégradé, et des électrovannes 96 pour interrompre la communication entre ledit maître-cylindre et les freins en fonctionnement normal, **caractérisé en ce que** ledit maître-cylindre est un maître-cylindre selon l'une quelconque des revendications précédentes.

10. Système de freinage selon la revendication précédente **caractérisé en ce que** le générateur de pression (94) est une pompe électrique.

## Claims

1. Master cylinder for electro-hydraulic braking systems comprising a body (2) of longitudinal axis (X) pierced with a bore (4), a piston (10) mounted to slide in sealed fashion in the bore and axially dividing the bore into a supply chamber (22) sealedly connected to a brake fluid reservoir (R) and a working chamber (24) and a cartridge (28) simulating the pedal feel, the said working chamber (24) in normal operation being in communication with the inside of the cartridge (28) simulating the pedal feel and in degraded operation being in communication with at least one brake arranged at a wheel, the said cartridge (28) comprising a piston (42) able to be subjected, via a first face (44) to the pressurized brake fluid supplied by the working chamber (24) and subjected via a second face (46) to a variable-stiffness elastic means (48), **characterized in that** the elastic means (48) comprises at least a first helical spring (78) and a second helical spring (80), the first spring (78) having first turns (Sn) and being mounted so as to bear between the second face (44) of the piston (42) of the cartridge and an end wall of the cartridge, the second spring (80) having second turns (Zi) and being mounted coaxial with the first spring (78) so that the elastic means (48) comprises sets (Ej) formed of a driving turn (Ste) of the first spring (78) and of a driven turn (Seej) of the second spring (80), the driving turn (Stej) preceding the driven turn (Seej) of the same set (Ej) in the direction (B) of travel of the piston (42) of the cartridge under a braking action, and **in that** the driven turn (Seej) of a set (Ej) is able to form a mobile bearing means for the driving turn (Stej) of the said set under a braking action.

2. Master cylinder according to claim 1, **characterized in that** the driving turn (Stej) is separated from the driven turn (Seej) by a distance (aj) that varies monotonously over one turn revolution.

3. Master cylinder according to claim 2, **characterized in that** the variation in the distance (aj) between the driven turn (Seej) and the driving turn (Stej) differs for each set (Ej).

4. Master cylinder according to claim 1, 2 or 3, **characterized in that** the first spring (78) is a helical spring with turns (Sn) of roughly circular cross section and **in that** the second spring (80) is a helical spring with turns (Zi) of roughly parallelepipedal cross section.

5. Master cylinder according to claim 1 to 4, **characterized in that** the turns (Sn) of the first spring (78) are separated by a constant axial dimension (e).

6. Master cylinder according to any one of the preceding claims, **characterized in that** the turns (Zi) of the second spring (78) are separated by a constant axial distance (d).

7. Master cylinder according to any one of the preceding claims, **characterized in that** the cartridge comprises means (82) of adjusting the simulated pedal feel making it possible to alter the relative angular position of the driven turn (Seej) with respect to the driving turn (Stej) of the same set.

8. Master cylinder according to the preceding claim, **characterized in that** the said adjusting means (82) comprise a stepping electric motor allowing the second spring to be moved rotationally.

9. Electro-hydraulic braking system comprising means 88 of detecting the braking action of the driver, a computer 90 receiving the information from the detection means 88 and generating commands to actuate at least one brake 92 arranged at a wheel, a pressure generator 94 receiving the command from the computer 90 to send pressurized fluid to the brakes 92, a master cylinder allowing the pedal feel to be simulated under normal operation and serving as a source of pressurized brake fluid in degraded operation, and electrically operated valves 96 to interrupt the communication between the said master cylinder and the brakes in normal operation, **characterized in that** the said master cylinder is a master cylinder according to any one of the preceding claims.

10. Braking system according to the preceding claim, **characterized in that** the pressure generator (94) is an electric pump.

## Patentansprüche

1. Hauptzylinder für ein elektrohydraulisches Bremssystem, mit einem Körper (2) mit einer Längsachse (X), der von einer Bohrung (4) durchsetzt ist, einem Kolben (10), der in dichter Weise gleitend in der Bohrung angebracht ist und die Bohrung axial in eine Versorgungskammer (22), die in dichter Weise mit einem Bremsflüssigkeitsbehälter (R) verbunden ist, und in eine Arbeitskammer (24) unterteilt, und einer Kartusche (28) zur Simulation des Pedalgefühls, wobei die Arbeitskammer (24) im Normalbetrieb mit dem Inneren der Kartusche (28) zur Simulation des Pedalgefühls und im gedrosselten Betrieb mit mindestens einer auf Höhe eines Rads angeordneten Bremse verbunden ist, wobei die Kartusche (28) einen Kolben (42) aufweist, der über eine erste Fläche (44) der unter Druck stehenden Bremsflüssigkeit, die von der Arbeitskammer (24) bereitgestellt wird, und über eine zweite Fläche (46) einem elastischen Mittel (48) mit variabler Steifigkeit ausgesetzt ist, **dadurch gekennzeichnet, dass** das elastische Mittel (48) mindestens eine erste Spiralfeder (78) und eine zweite Spiralfeder (80) aufweist, wobei die erste Feder (78) erste Windungen (Sn) aufweist und anliegend zwischen der zweiten Fläche (44) des Kolbens (42) der Kartusche und einem Boden der Kartusche angebracht ist, wobei die zweite Feder (80) zweite Windungen (Zi) aufweist und koaxial zur ersten Feder (78) angebracht ist, so dass das elastische Mittel (48) Baugruppen (Ej) aufweist, die aus einer antreibenden Windung (Ste) der ersten Feder (78) und einer angetriebenen Windung (Seej) der zweiten Feder (80) gebildet sind, wobei die antreibende Windung (Stej) in Verlagerungsrichtung (B) des Kolbens (42) der Kartusche bei einem Bremsvorgang vor der angetriebenen Windung (Seej) der gleichen Baugruppe (Ej) angeordnet ist, und dass die angetriebene Windung (Seej) einer Baugruppe (Ej) bei einem Bremsvorgang ein bewegliches Anlageelement für die antreibende Windung (Stej) der Baugruppe bilden kann.

2. Hauptzylinder nach Anspruch 1, **dadurch gekennzeichnet, dass** die antreibende Windung (Stej) in einem Abstand (aj) von der angetriebenen Windung (Seej) entfernt ist, der über eine Windungsumdrehung monoton variiert.

3. Hauptzylinder nach Anspruch 2, **dadurch gekennzeichnet, dass** die Änderung des Abstands (aj) zwischen der angetriebenen Windung (Seej) und der antreibenden Windung (Stej) für jede Baugruppe (Ej) unterschiedlich ist.

4. Hauptzylinder nach Anspruch 1, 2 oder 3, **dadurch gekennzeichnet, dass** die erste Feder (78) eine Spiralfeder mit Windungen (Sn) ist, die einen im Wesentlichen kreisförmigen Querschnitt aufweisen, und die zweite Feder (80) eine Spiralfeder mit Windungen (Zi) ist, die einen im Wesentlichen quaderförmigen Querschnitt aufweisen.

5. Hauptzylinder nach den Ansprüchen 1 bis 4, **dadurch gekennzeichnet, dass** die Windungen (Sn) der ersten Feder (78) mit einem konstanten axialen Maß (e) voneinander beabstandet sind.

6. Hauptzylinder nach einem der vorhergehenden Ansprüche, **dadurch gekennzeichnet, dass** die Windungen (Zi) der zweiten Feder (78) mit einem konstanten axialen Abstand (d) voneinander entfernt sind.

7. Hauptzylinder nach einem der vorhergehenden Ansprüche, **dadurch gekennzeichnet, dass** die Kartusche Mittel (82) zum Einstellen des simulierten Pedalgefühls aufweist, die die Änderung der relativen Winkelstellung der angetriebenen Windung (Seej) zur antreibenden Windung (Stej) der gleichen Baugruppe ermöglichen.

8. Hauptzylinder nach dem vorhergehenden Anspruch, **dadurch gekennzeichnet, dass** die Einstellmittel (82) einen elektrischen Schrittmotor aufweisen, der eine Drehbewegung der zweiten Feder ermöglicht.

9. Elektrohydraulisches Bremssystem mit Mitteln (88) zur Erfassung des Bremsvorgangs durch den Fahrer, einem Rechner (90), der die Informationen von den Erfassungsmitteln (88) erhält und Steuerbefehle erzeugt, um die Betätigung mindestens einer auf Höhe eines Rads angeordneten Bremse (92) zu bewirken, einem Druckgenerator (94), der von dem Rechner (90) den Befehl erhält, unter Druck stehende Flüssigkeit zu den Bremsen (92) zu leiten, einem Hauptzylinder, der im Normalbetrieb die Simulation des Pedalgefühls ermöglicht und im gedrosselten Betrieb als Quelle für unter Druck stehende Bremsflüssigkeit dient, und mit Magnetventilen (96) zur Unterbrechung der Verbindung zwischen dem Hauptzylinder und den Bremsen im Normalbetrieb, **dadurch gekennzeichnet, dass** der Hauptzylinder ein Hauptzylinder nach einem der vorhergehenden Ansprüche ist.

10. Bremssystem nach dem vorhergehenden Anspruch, **dadurch gekennzeichnet, dass** der Druckgenerator (94) eine elektrische Pumpe ist.
